# EUROPEAN PATENT APPLICATION

(11) **EP 2 020 770 A1**
(43) Date of publication of application: **04.02.2009**
(21) Application number: 06756499.7
(22) Date of filing: 23.05.2006
(51) Int. Cl.: H04J 11/00, H04B 1/707

(54) **RADIO BASE STATION APPARATUS**

(71) Applicant: Panasonic Corporation, Kadoma-shi Osaka 571-8501 (JP)
(72) Inventor: NAKA, Katsuyoshi c/o Panasonic Corporation, Osaka 540-6207 (JP); HAGA, Hiroki c/o Panasonic Corporation, Osaka 540-6207 (JP)
(74) Representative: Grünecker, Kinkeldey, Stockmair & Schwanhäusser Anwaltssozietät
(86) International application number: PCT/JP2006/310243
(87) International publication number: WO 2007/135733

(57) **Abstract**

A radio base station apparatus having an improved cell search performance in a scalable bandwidth system. A base station (100) can flexibly assign communication bandwidths of terminals from support bandwidths included in cell bandwidths that are the greatest ones, which are used by the base stations, of support bandwidths supported by a scalable bandwidth system. The base station (100) comprises a frame forming part (160) that forms a frame in which the pattern of a frame synchronization sequence (P-SCH), which is placed in a predetermined one, having a smallest support bandwidth, of bands of cell bandwidths, differs according to the cell bandwidths; an IFFT part (170) that serves as a frame transmitting means for transmitting the foregoing frame; a GI inserting part (180); and a radio transmitting part (190).

## Description

### Technical Field

The present invention relates to a radio base station apparatus in a scalable bandwidth system.

### Background Art

Up till now, to perform multicarrier communication represented by the OFDM (Orthogonal Frequency Division Multiplexing) scheme, a radio communication system is proposed where a radio base station apparatus (hereinafter simply "base station") is able to flexibly assign, from its maximum supported bandwidth (hereinafter simply "cell bandwidth") to be used in the cell it covers, the bandwidth in which the radio terminal apparatuses (hereinafter simply "terminals") actually perform communication among a plurality of supported bandwidths radio base station apparatuses support. Such radio communication system is referred to as a scalable bandwidth system (e.g., see Non-Patent Document 1). The 3GPP LTE, which supports the scalable bandwidth system, assumes 1.25 MHz, 2.5 MHz, 5 MHz, 10 MHz, 15 MHz and 20 MHz as the supported bandwidth in uplink and downlink transmission.

In the scalable bandwidth system, the transmission bandwidth of a cell (i.e., base station) can be flexibly changed, and, consequently, a terminal performs an initial cell search without knowing the cell's transmission bandwidth.

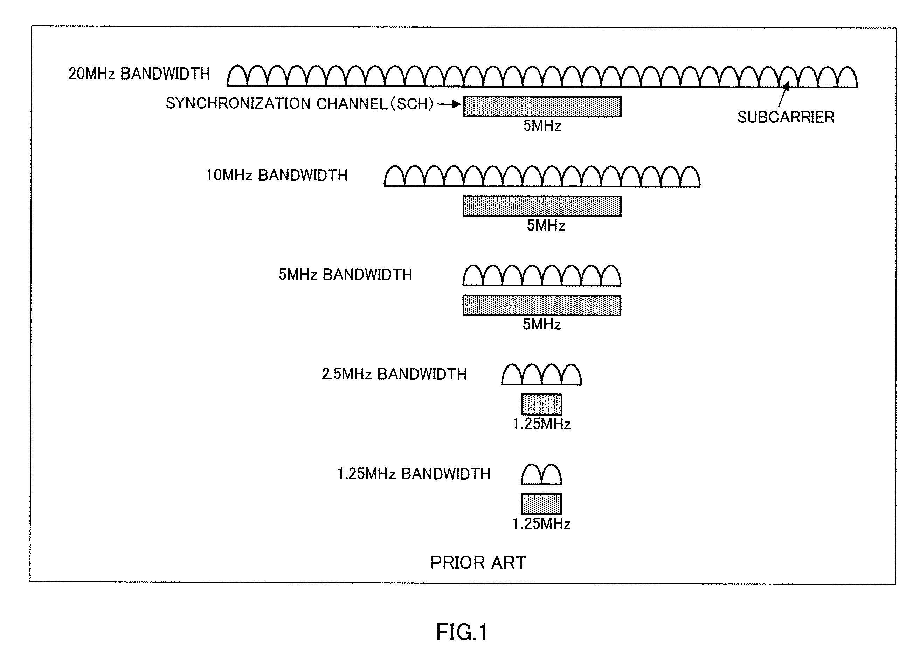

Non-Patent Document 2 discloses an initial cell search method in a scalable bandwidth system. In this initial cell search method, as shown in FIG.1, the synchronization channel ("SCH") used for cell search and the broadcast channel ("BCH") that transmits broadcast information of the cell, are transmitted using the central portion (central band) of the scalable maximum bandwidth (20 MHz). Here, the SCH is comprised of the primary SCH (P-SCH) and the secondary SCH (S-SCH). The P-SCH is the channel for finding the subframe timing or frame timing, and the S-SCH is the channel for finding cell ID (i.e., cell-specific information).

In the related art (e.g., Non-Patent Document 2), these P-SCH and S-SCH are frequency-multiplexed in the same OFDM symbol. FIG.1 illustrates an example of mapping an SCH in the frequency domain. In this figure, a cell transmits a 1.25 MHz SCH when the cell bandwidth is less than 5 MHz, and transmits a 5 MHz SCH when the cell bandwidth is equal to or greater than 5 MHz.

By mapping the SCH as above, the following effect is provided. That is, first, the SCH is mapped around the central portion of the maximum scalable bandwidth (20 MHz) regardless of the cell bandwidth, so that a terminal takes a shorter time to perform a carrier search. Second, regardless of the bandwidth in which the terminal can perform transmission or reception, it is possible to realize a substantially equal area coverage and perform a high speed cell search. Finally, a terminal which can perform transmission and reception in a wideband (which is more than 5 MHz) can receive a 5 MHz SCH, so that it is possible to provide frequency diversity effect.
Non-Patent Document 1: 3GPP TR 25.913 v7.0.0 (2005-06) "Requirements for Evolved UTRA and UTRAN"
Non-Patent Document 2: 3GPP, R1-051308, NTT DoCoMo et al, "Text Proposal on Cell Search in Evolved UTRA"

### Disclosure of Invention

### Problem to be Solved by the Invention

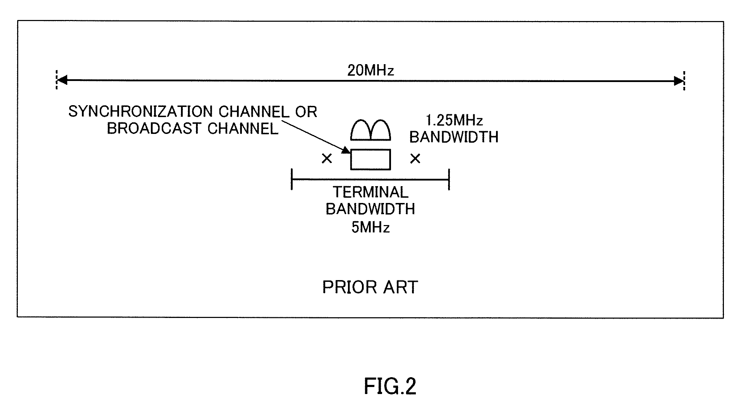

However, a conventional scalable bandwidth system contains the following problem. That is, as shown in FIG.2, if a terminal which can perform transmission and reception in the 5 MHz bandwidth detects a 1.25 MHz cell as a 5 MHz cell by mistake from the correlated result of the P-SCH, it is not possible to acquire correct cell information upon decoding the S-SCH and BCH. In other words, if a terminal does not know the cell's service bandwidth accurately, there is a problem of deterioration of cell search performance.

It is therefore an object of the present invention to provide a radio base station apparatus to improve cell search performance in a scalable bandwidth system.

### Means for Solving the Problem

The radio base station apparatus of the present invention that can flexibly assign communication bandwidths to radio terminal apparatuses from a plurality of bandwidths supported in a scalable bandwidth system including a plurality of radio base station apparatuses, the communication bandwidths being within a maximum supported bandwidth the radio base station apparatus uses, employs a configuration having: a frame forming section that forms a frame in which a pattern of a frame synchronization sequence mapped in a predetermined band of a minimum supported bandwidth in a band of the base station bandwidth varies, or in which a mapping position of the frame synchronization sequence in the predetermined band varies, according to the base station bandwidth; and a frame transmitting section that transmits the frame.

### Advantageous Effect of the Invention

According to the present invention, it is possible to provide a radio base station apparatus to improve cell search performance in a scalable bandwidth system.

### Brief Description of Drawings

FIG.1 illustrates an initial cell search method in a conventional scalable bandwidth system;
FIG.2 illustrates an initial cell search method in a conventional scalable bandwidth system;
FIG.3 is a block diagram showing a configuration of a radio base station apparatus according to Embodiment 1 of the present invention;
FIG.4 is a block diagram showing a configuration of a radio terminal apparatus according to Embodiment 1;
FIG.5 illustrates a frame which the radio base station apparatus of FIG.3 transmits;
FIG.6 illustrates relationships between cell bandwidth groups and SCH's in Embodiment 1;
FIG.7 illustrates relationships between cell bandwidth groups and SCH's in Embodiment 2;
FIG.8 illustrates relationships between cell bandwidth groups and phase information provided for an SCH;
FIG.9 illustrates relationships between cell bandwidth groups and SCH's in Embodiment 3;
FIG.10 illustrates a method of selecting a subcarrier group in a central supported band in Embodiment 3;
FIG.11 illustrates relationships between cell bandwidth groups and SCH's in Embodiment 4; and
FIG.12 illustrates relationships between cell bandwidth groups and SCH's in another Embodiment.

### Best Mode for Carrying out the Invention

Embodiments of the present invention will be explained below in detail with reference to the accompanying drawings. Further, in these Embodiments, the same components will be assigned the same reference numerals and overlapping explanations will be omitted.

### (Embodiment 1)

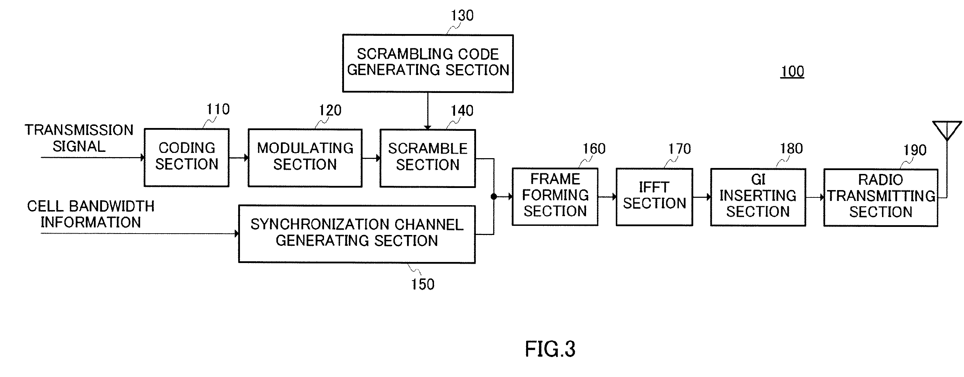

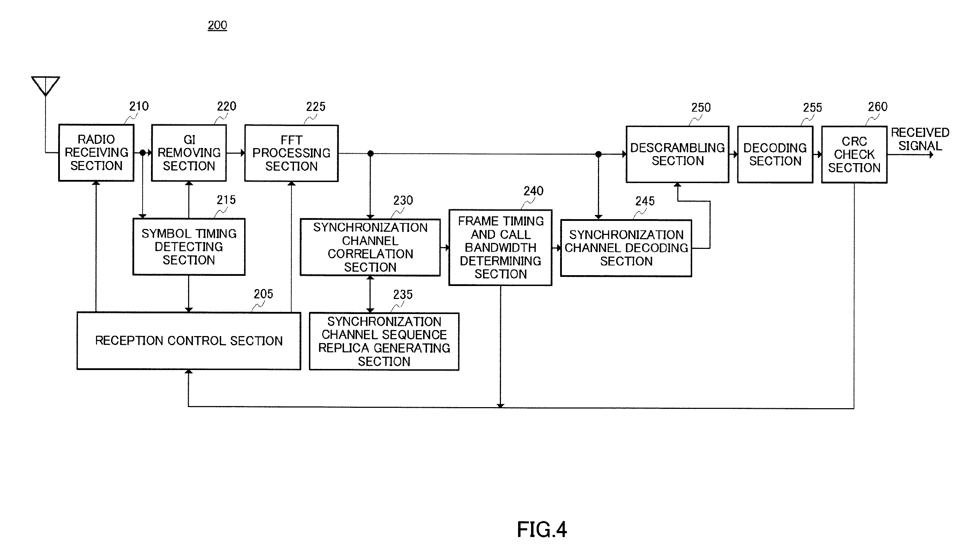

FIG.3 shows the configuration of radio base station apparatus (hereinafter "base station") 100 in the scalable bandwidth system of the present embodiment, and FIG.4 shows a radio terminal apparatus (hereinafter "terminal") 200 that communicates with base station 100.

First, base station 100 shown in FIG.3 will be explained. As shown in this figure, base station 100 is configured with coding section 110, modulating section 120, scrambling code generating section 130, scramble section 140, frame forming section 160, IFFT section 170, GI inserting section 180 and radio transmitting section 190.

Coding section 110 performs predetermined coding for an inputted transmission signal and transmits the acquired encoded signal to modulating section 120. Modulating section 120 performs predetermined primary modulation (generally, a primary modulation according to QoS or radio channel condition) for the encoded signal, and transmits the acquired modulation signal to scramble section 140.

Scrambling code generating section 130 generates a scrambling code according to the scrambling code number specific to base station 100, and outputs the generated scrambling code to scramble section 140.

Scramble section 140 scrambles the modulation signal by multiplying the modulation signal and the scrambling code on a per OFDM symbol basis, and transmits the scrambled signal to frame forming section 160.

Synchronization channel generating section 150 receives as input the cell bandwidth information about the cell covered by base station 100, and generates a P-SCH of a pattern according to this cell bandwidth information (i.e., generates a P-SCH of a unique pattern according to the cell bandwidth information). Base stations 100 are classified into groups (also referred to as "cell bandwidth groups") according to the cell bandwidths of base stations 100, and associated with P-SCH of respective patterns per cell bandwidth group. The cell bandwidth information inputted to synchronization channel generating section 150 is the information indicating the maximum supported bandwidth used in the cell of base station 100 among the bandwidths the scalable bandwidth system supports. Further, synchronization channel generating section 150 generates an S-SCH for finding cell ID (i.e., cell-specific information). This S-SCH has a length according to the cell bandwidth group.

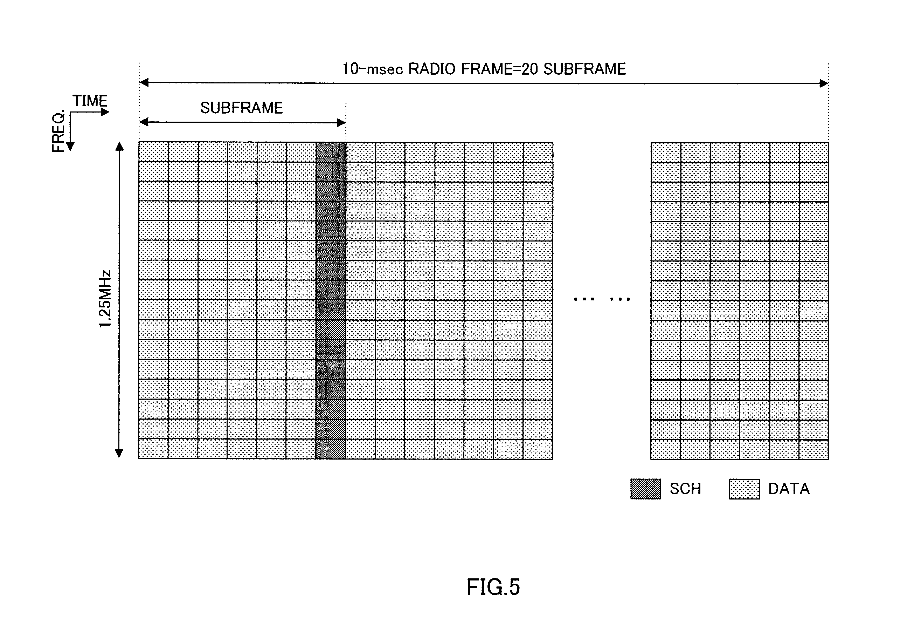

With the P-SCH from synchronization channel generating section 150, frame forming section 160 forms a frame in which a unique P-SCH is mapped at least in a predetermined symbol according to the cell bandwidth group, in the central band of the minimum supported bandwidth (also referred to as "central supported band") in the maximum supported bandwidth the scalable bandwidth system supports. Further, frame forming section 160 maps the S-SCH in symbol positions of a certain positional relationship with the symbol in which the P-SCH is mapped. This S-SCH is mapped in a band of the bandwidth associated with the cell bandwidth group. As shown in FIG.5, frame forming section 160 maps the SCH at least in one OFDM symbol in a frame, and maps the scrambled signal from scramble section 140 in the other symbols than the symbol in which the SCH is mapped. That is, the SCH and the scrambled signal are time-multiplexed.

The output of frame forming section 160 is transformed in IFFT (Inverse Fast Fourier Transform) section 170, from a frequency domain signal into a time domain signal, which is a multicarrier signal, inserted a guard interval ("GI") in GI insertion section 180, subjected to predetermined radio processing such as digital/analogue conversion processing and up-conversion processing on a radio frequency in radio transmitting section 190, and outputted from an antenna.

Next, the configuration of terminal 200 shown in FIG.4 will be explained. As shown in the figure, terminal 200 is configured with reception control section 205, radio receiving section 210, symbol timing detecting section 215, GI removing section 220, FFT processing section 225, synchronization channel correlation section 230, synchronization channel sequence replica generating section 235, frame timing and cell bandwidth determining section 240, synchronization channel decoding section 245, descrambling section 250, decoding section 255 and CRC check section 260.

Reception control section 205 controls the output destination of radio receiving section 210 and FFT processing section 225 according to the condition of terminal 200 (such as the first, second and third step in the initial cell search mode or normal reception mode).

When terminal 200 is in the first step in the initial cell search mode, reception control section 205 generates and transmits an output destination command signal that designates symbol timing detecting section 215 as the output destination, to radio receiving section 210. When terminal 200 is in other steps than the first step in the initial cell search mode, reception control section 205 generates and transmits an output destination command signal that designates GI removing section 220 as the output destination, to radio receiving section 210. Further, when the first step in the initial cell search mode has been finished, if frame timing and cell bandwidth determining section 240 detects the cell bandwidth, reception control section 205 transmits the cell bandwidth information to radio receiving section 210.

When terminal 200 is in the second step in the initial cell search mode, reception control section 205 generates and transmits an output destination command signal that designates synchronization channel correlation section 230 as the output destination, to FFT processing section 225. When terminal 200 is in the third step in the initial cell search mode, reception control section 205 generates and transmits an output destination command signal that designates synchronization channel decoding section 245 as the output destination, to FFT processing section 225. When terminal 200 is in the normal reception mode, reception control section 205 generates and transmits an output destination command signal that designates descrambling section 250 as the output destination, to FFT processing section 225.

Radio receiving section 210 performs radio receiving processing (such as down-conversion and A/D conversion) on a received signal. When terminal 200 is in the first step in the initial cell search mode, radio receiving section 210 performs radio receiving processing on the received signal in the above-described central supported band, and outputs the result to symbol timing detecting section 215.

When the first step in the initial cell search mode has been finished, radio receiving section 210 outputs the signal after radio receiving processing, to GI removing section 220. After receiving cell bandwidth group information specified in frame timing and cell bandwidth determining section 240 from reception control section 205, radio receiving section 210 performs receiving processing in the bandwidth indicated by the cell bandwidth group information.

Symbol timing detecting section 215 receives as input the signal after radio receiving processing, and detects the symbol timing by the GI correlation method (autocorrelation method) or the mutual correlation method using time replica waveforms. The detected symbol timing is outputted to GI removing section 220 and reception control section 205.

GI removing section 220 receives as input the signal after radio receiving processing, removes the GI according to the symbol timing (FFT window timing) detected in symbol timing detecting section 215, and outputs the acquired signal without a GI, to FFT processing section 225.

FFT processing section 225 receives as input the received signal without a GI, and performs FFT processing on the signal on a per OFDM symbol basis. FFT processing section 225 outputs the received signal after FFT processing to synchronization channel correlation section 230 when terminal 200 is in the second step in the initial cell search mode, outputs the received signal to synchronization channel decoding section 245 when terminal 200 is in the third step in the initial cell search mode, and outputs the received signal to descrambling section 250 when terminal 200 is in the normal reception mode.

Synchronization channel correlation section 230 performs a correlation calculation for all OFDM symbols in a frame in the received signal after FFT processing, using all the P-SCH pattern candidates associated with the cell bandwidth group.

Synchronization channel sequence replica generating section 235 generates all the P-SCH pattern candidates associated with the cell bandwidth group and outputs the results to synchronization channel correlation section 230.

Frame timing and cell bandwidth determining section 240 receives as input the correlation calculation results of all OFDM symbols in a frame per P-SCH pattern associated with the cell bandwidth group. Frame timing and cell bandwidth determining section 240 detects the subframe timing or frame timing from the symbol associated with the maximum correlation value in the inputted correlation calculation results. Further, frame timing and cell bandwidth determining section 240 specifies the P-SCH associated with the maximum correlation value, and specifies the cell bandwidth group associated with the P-SCH. The detected subframe timing or frame timing and the specified cell bandwidth group are transmitted to reception control section 205 and synchronization channel decoding section 245.

When terminal 200 is in the third step in the initial cell search, synchronization channel decoding section 245 receives as input the received signal after FFT processing from FFT processing section 225, and decodes the S-SCH. Synchronization channel decoding section 245 knows the symbol positions where the S-SCH is mapped, from the subframe timing or frame timing detected in frame timing and cell bandwidth determining section 240, and therefore can decode the S-SCH. As described above, the S-SCH represents the information relating to the cell, such as scrambling code information.

Descrambling section 250 receives as input the received signal after FFT processing from FFT processing section 225 when terminal 200 is in the normal reception mode. Descrambling section 250 descrambles the received signal after FFT processing to remove the scrambling code associated with the S-SCH decoded in synchronization channel decoding section 245.

Decoding section 255 performs appropriate error correcting decoding for the descrambled received signal, and outputs the result to CRC check section 260.

CRC check section 260 performs a CRC error check for the inputted signal, and, when there is no error, determines that the initial cell search has been finished, and, when there is error, outputs the CRC error check result for a retry from the first step, to reception control section 205.

Next, the operation of a scalable bandwidth system having above-noted base station 100 and terminal 200 will be explained.

In the scalable bandwidth system, as described above, base stations 100 supporting 1.25 MHz, 2.5 MHz, 5 MHz, 10 MHz, 15 MHz and 20 MHz exist individually. Further, terminals 200 that can perform reception in bands of 1.25 MHz, 2.5 MHz, 5 MHz, 10 MHz, 15 MHz and 20 MHz exist individually. Further, base stations 100 are classified into cell bandwidth groups according to the cell bandwidths. Here, as in the conventional case, a case will be explained where cell bandwidth groups are classified between the cell bandwidth group having a bandwidth less than 5 MHz and the cell bandwidth group having a 5 MHz or greater bandwidth.

In base station 100, synchronization channel generating section 150 generates an SCH which has a length associated with the cell bandwidth information and which includes a unique pattern in the central portion according to the cell bandwidth information.

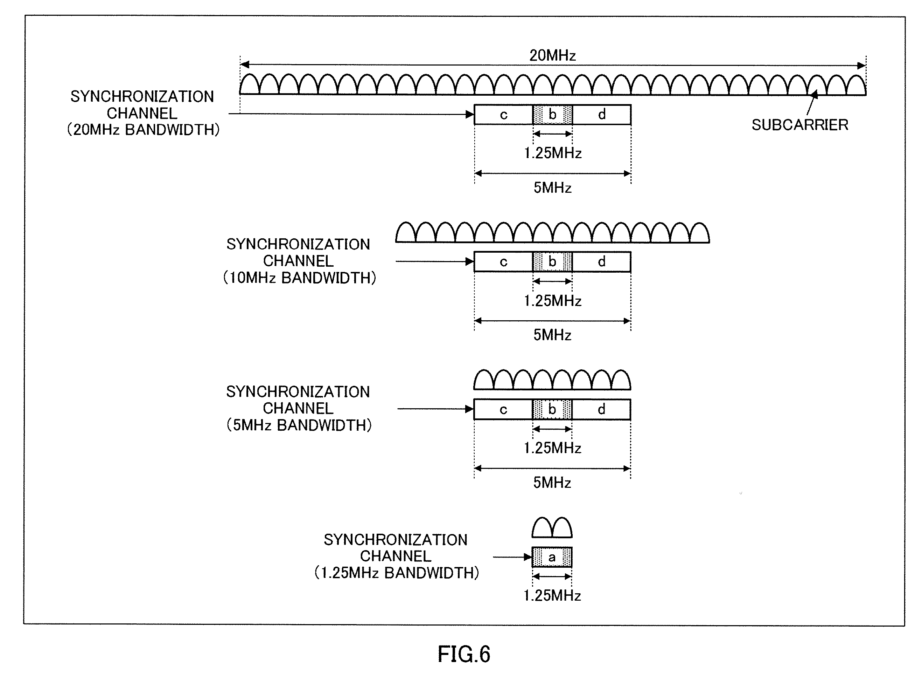

FIG.6 illustrates the relationships between cell bandwidth groups and SCH's. As shown in this figure, when the cell bandwidth is less than 1.25 MHz, a 1.25 MHz SCH is generated, and, when the cell bandwidth is equal to or greater than 1.25 MHz, a 5 MHz SCH is generated. In this case, when the cell bandwidth is less than 5 MHz, synchronization channel generating section 150 generates an SCH including pattern "a" in the central portion, and, when the cell bandwidth is equal to or greater than 5 MHz, generates an SCH including pattern "b" in the central portion.

Frame forming section 160 forms a frame in which the P-SCH of a unique pattern associated with the cell bandwidth group is mapped in the central supported band. To be more specific, when the cell bandwidth is less than 5 MHz, the P-SCH of pattern "a" is mapped in the central supported band, and, when the cell bandwidth is equal to or greater than 5 MHz, the P-SCH of pattern "b" is mapped in the central supported band. In the example of FIG.6, the S-SCH's of pattern "c" and pattern "d" are mapped in subcarriers other than the central supported band in the cell of 5 MHz or greater bandwidth. These pattern "c" and pattern "d" may be the same pattern. Further, although a case has been explained with the figure where an SCH comprised of patterns "c", "b" and "d" is used in 5 MHz, 10 MHz and 20 MHz, according to the cell bandwidth, it is equally possible to map an S-SCH of a unique pattern according to the cell bandwidth, in the bands in which the S-SCH's of pattern "c" and pattern "d" are mapped, that is, in the bands which are different from the central supported band.

The frame formed in frame forming section 160 is transmitted via IFFT section 170, GI inserting section 180 and radio transmitting section 190.

Terminal 200 performs a cell search using a signal transmitted from base station 100. At this time, in terminal 200, synchronization channel correlation section 230 performs correlation calculations between a received signal of the central supported band and all the P-SCH pattern candidates that can be mapped in the central supported band, frame timing and cell bandwidth determining section 240 specifies the cell bandwidth group associated with the P-SCH pattern to find the correlation peak, and synchronization channel decoding section 245 decodes the S-SCH mapped in a band of a bandwidth associated with the cell bandwidth group.

As described above, according to the present embodiment, base station 100 is able to flexibly assign bandwidths to the terminals from a plurality of bandwidths supported in the scalable bandwidth system, the assigned bandwidths being within the cell bandwidth which is the maximum bandwidth base station 100 uses, employs a configuration having: frame forming section 160 that forms a frame in which a pattern of a frame synchronization sequence (P-SCH) mapped in the central supported band which has the minimum supported bandwidth and which is the center of the cell bandwidth, varies according to the cell bandwidth; and frame transmitting sections (such as IFFT section 170, GI inserting section 180 and radio transmitting section 190) that transmit the frame.

By this means, a frame is transmitted in which a frame synchronization sequence of a unique pattern is mapped in the central supported band of the minimum supported bandwidth according to the cell bandwidth. Therefore, by receiving the minimum supported bandwidth in the receiving terminal regardless of the bandwidth the terminal can receive, the group to which the cell bandwidth of the cell that is targeted for a cell search belongs, can be specified accurately, so that it is possible to improve the cell search performance. Further, as a result, the S-SCH that may be mapped in a unique position according to the cell bandwidth can be decoded accurately, so that it is possible to improve the cell search performance.

### (Embodiment 2)

In Embodiment 2, as in Embodiment 1, a frame is used where a unique P-SCH is mapped in the central supported band according to the cell bandwidth group. However, in Embodiment 2, although the P-SCH of a base pattern common for all cell bandwidth groups is mapped in the central supported band, the phase of the P-SCH in the central supported band differs between the cell bandwidth groups. That is, the phase information about the P-SCH mapped in the central supported band is the information for identifying the cell bandwidth groups.

The differences from Embodiment 1 will be explained. First, base station 100 of Embodiment 2 is different from base station 100 of Embodiment 1 in the operations of synchronization channel generating section 150 and frame forming section 160. Synchronization channel generating section 150 of Embodiment 2 receives as input the cell bandwidth information of the cell covered by base station 100, and generates a P-SCH shifting the phase of the base P-SCH pattern common for all cell bandwidth groups according to the cell bandwidth group associated with the cell bandwidth information.

In addition to the same operations as in Embodiment 1, frame forming section 160 maps a signal of the base phase for specifying the phase information about the P-SCH, in part of subcarriers in the central supported band. That is, although the phase of a signal transmitted from base station 100 is rotated under the channel environment, if a reference signal is included in the frame, the P-SCH and the reference signal are subjected to substantially equal phase rotation, so that the receiving terminal can specify the phase information about the P-SCH using the reference signal as a reference. Further, at least one subcarrier on which a reference signal is mapped is preferably provided in correlated bandwidths. Here, the correlated bandwidths refer to bands having similar propagation characteristics. By this means, it is possible to improve the robustness to frequency selective fading.

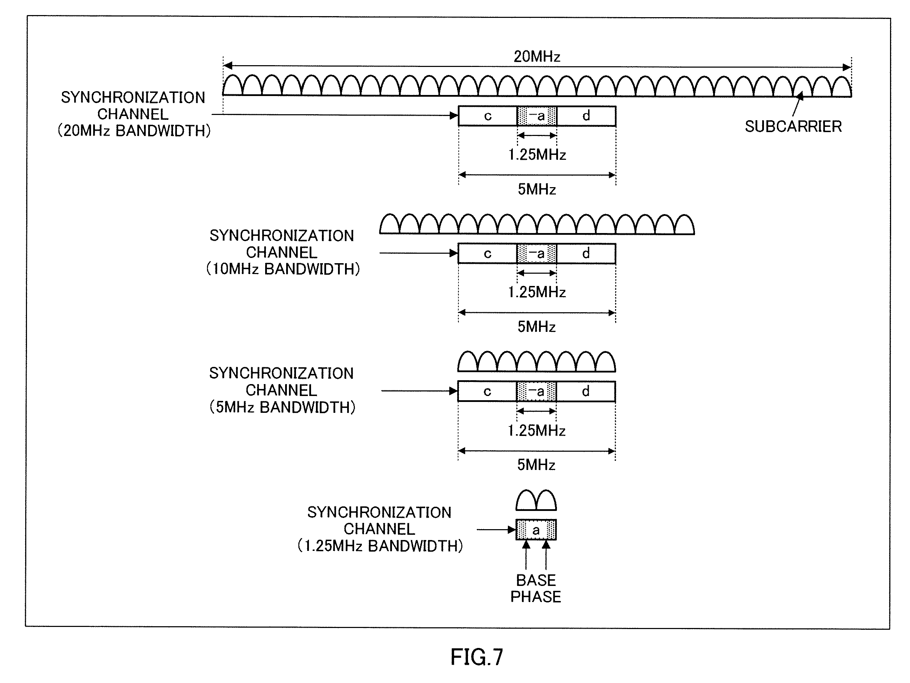

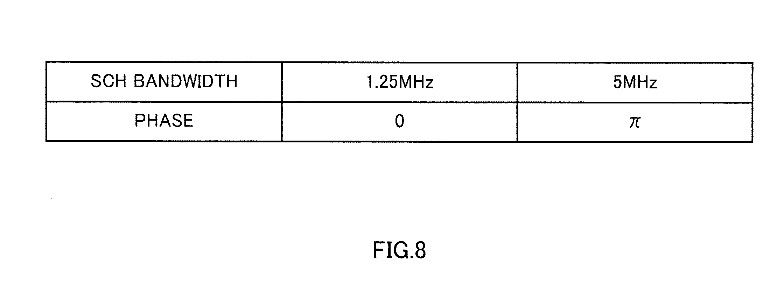

FIG.7 illustrates the relationships between cell bandwidth groups and SCH's. An example case will be explained below using the scalable bandwidth system adopted for explanations of the operations in Embodiment 1. As shown in FIG.8, the phase information about a P-SCH for the cell bandwidth group of a cell bandwidth less than 5 MHz is 0, and the phase information about a P-SCH for a cell bandwidth group of a cell bandwidth equal to or greater than 5 MHz is π. If the base pattern of the P-SCH is pattern "a," in the cell bandwidth group less than 5 MHz, a frame is formed in which the P-SCH of pattern "a" is mapped in the central supported band, and, in the cell band group equal to or greater than 5 MHz, a frame is formed in which the P-SCH of pattern "-a" acquired by multiplying pattern "a" by n is mapped in the central supported band (see FIG.7).

Next, terminal 200 will be explained. Terminal 200 of Embodiment 2 is different from terminal 200 of Embodiment 1 in the operations of synchronization channel correlation section 230 and frame timing and cell bandwidth determining section 240.

Synchronization channel correlation section 230 extracts reference signals from predetermined subcarriers and performs correlation calculations for all OFDM symbols in a frame in a received signal after FFT processing, using the P-SCH of the base pattern. Further, synchronization channel correlation section 230 performs the above processing on a received signal when terminal 200 is in the second step in the initial cell search. Here, the target signal of the processing is obviously the signal mapped in the central supported band.

Frame timing and cell bandwidth determining section 240 detects a peak of correlation value power from the output of synchronization channel correlation section 230, and detects the timing to find the peak as the frame timing. Further, frame timing and cell bandwidth determining section 240 detects the phase of the correlation value (complex value) to find the peak of the correlation value power, compares the detected phase to the phase of the reference signal extracted in synchronization channel correlation section 230, and detects the phase difference from the reference signal. With this detected phase difference, the phase information about the P-SCH mapped in the central supported band can be specified, so that it is possible to specify to which cell bandwidth group the cell that is targeted for a cell search belongs, based on the specified phase information about the P-SCH, from the associated relationship shown in FIG.8.

As described above, according to the present embodiment, base station 100 is able to flexibly assign bandwidths to the terminals from a plurality of bandwidths supported in the scalable bandwidth system, the assigned bandwidths being within the cell bandwidth which is the maximum bandwidth base station 100 uses, and employs a configuration having: frame forming section 160 that forms a frame in which a pattern of a frame synchronization sequence (P-SCH) mapped in the central supported band which has the minimum supported bandwidth and which is the center of the cell bandwidth, varies according to the cell bandwidth; and frame transmitting sections (such as IFFT section 170, GI inserting section 180 and radio transmitting section 190) that transmit the frame, and in which frame forming section 160 forms a frame in which a frame synchronization sequence acquired by shifting the phase of a base sequence pattern according to the group to which the base station bandwidth belongs.

By this means, the receiving terminal needs to perform correlation calculations using only the frame synchronization sequence of the base pattern, so that it is possible to specify a cell bandwidth accurately while reducing the amount of calculations.

### (Embodiment 3)

In Embodiment 3, as in Embodiment 1, a frame is used in which a P-SCH of a unique pattern is mapped in the central supported bandwidth according to the cell bandwidth group. However, in Embodiment 3, the subcarriers of the central supported band are divided into a plurality of subcarrier groups. Here, a P-SCH of a base pattern is mapped to the first subcarrier group, and, as in Embodiment 2, a P-SCH shifting the phase of the base pattern according to the cell bandwidth group, is mapped to the second subcarrier group.

The differences from Embodiment 1 will be explained below. First, base station 100 of Embodiment 3 is different from base station 100 of Embodiment 1 in the operations of synchronization channel generating section 150 and frame forming section 160. Synchronization channel generating section 150 of Embodiment 3 receives as input the cell bandwidth information of the cell covered by base station 100, and generates a sequence of a base pattern common for all cell bandwidth groups and a sequence shifting the phase of the base pattern according to the cell bandwidth group according to the cell bandwidth information.

In the subcarrier groups relating to the subcarriers in the central supported band, frame forming section 160 maps the P-SCH of the base pattern to the first subcarrier group and maps the P-SCH shifting the phase of the base pattern according to the cell bandwidth group, to the second subcarrier group. Further, the P-SCH of the base pattern mapped in the first subcarrier group can serve as a reference signal, so that, unlike Embodiment 2, a reference signal needs not be prepared separately.

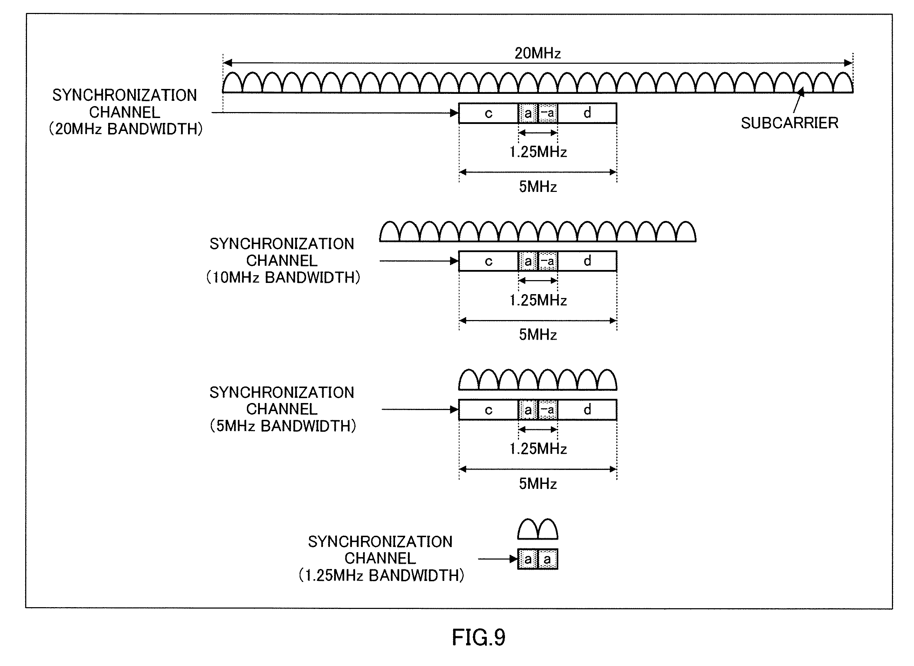

FIG.9 illustrates the relationships between cell bandwidth groups and SCH's. Here, a case will be explained using the scalable bandwidth system adopted for explanations of the operations in Embodiment 1. As shown in FIG.8, the phase information about a P-SCH for the cell bandwidth group of a cell bandwidth less than 5 MHz is 0, and the phase information about a P-SCH for the cell bandwidth group of a cell bandwidth equal to or greater than 5 MHz is n. If the base pattern of the P-SCH is pattern "a," in the cell bandwidth group less than 5 MHz, a frame is formed in which a P-SCH of pattern "a" is mapped to the first subcarrier group and to the second subcarrier group, and, in the cell band group equal to or greater than 5 MHz, a frame is formed in which a P-SCH of pattern "a" is mapped to the first subcarrier group, and in which a P-SCH of pattern "-a" acquired by multiplying pattern "a" by n is mapped to the second subcarrier group (see FIG.9).

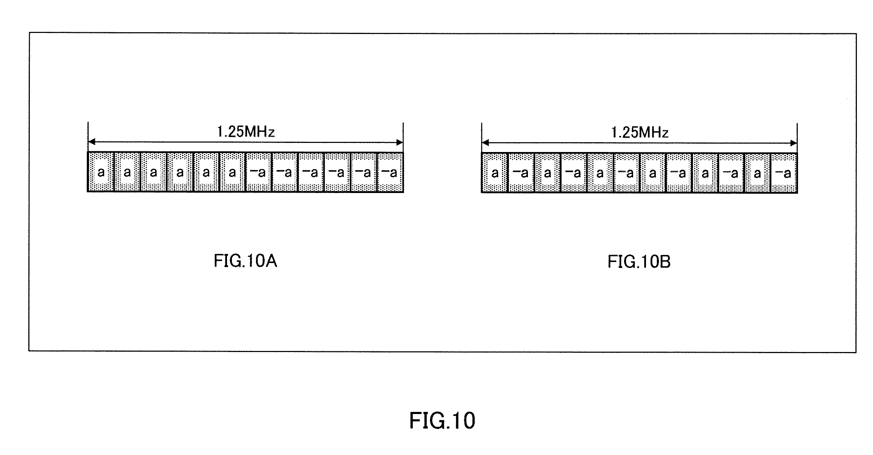

FIG.10 illustrates a method of selecting a subcarrier group in the central supported band. As shown in the figure, it is possible to select consecutive subcarriers in the frequency domain as a subcarrier group and select every other subcarrier in the frequency domain as a subcarrier group (see FIG.10B).

Next, terminal 200 will be explained. Terminal 200 of Embodiment 3 is different from terminal 200 of Embodiment 1 in the operations of synchronization channel correlation section 230 and frame timing and cell bandwidth determining section 240. Further, terminal 200 of Embodiment 3 does not need synchronization channel sequence replica generating section 235.

In the transmitting side, synchronization channel correlation section 230 performs a correlation calculation between a sequence mapped in the first subcarrier group and a sequence mapped in the second subcarrier group.

Frame timing and cell bandwidth determining section 240 detects a peak of correlation value power from the output of synchronization channel correlation section 230 and detects the timing to find the peak as the frame timing. Further, frame timing and cell bandwidth determining section 240 detects the phase of the correlation value (complex value) to find the peak of the correlation value power, compares the found phase and the phase of the sequence mapped in the first subcarrier group, and detects the phase difference from the sequence mapped in the first subcarrier group. With this detected phase difference, phase information can be specified, so that it is possible to specify from the associated relationship shown in FIG.8, to which cell bandwidth group the cell that is targeted for a cell search belongs, based on the specified phase information of the P-SCH.

As described above, according to the present embodiment, base station 100 is able to flexibly assign bandwidths to the terminals from a plurality of bandwidths supported in the scalable bandwidth system, the assigned bandwidths being within the cell bandwidth which is the maximum bandwidth base station 100 uses, and employs a configuration having: frame forming section 160 that forms a frame in which a pattern of a frame synchronization sequence (P-SCH) mapped in the central supported band which has the minimum supported bandwidth and which is the center of the cell bandwidth, varies according to the cell bandwidth; and frame transmitting sections (such as IFFT section 170, GI inserting section 180 and radio transmitting section 190) that transmit the frame, and in which frame forming section 160 forms a frame in which a frame synchronization sequence of a base sequence pattern is mapped to the first subcarrier group and in which a frame synchronization sequence shifting the phase of the base sequence pattern according to a group to which the base station bandwidth belongs, is mapped in the second subcarrier group.

By this means, the receiving terminal needs to perform correlation calculations using only the base pattern, so that it is possible to reduce the amount of calculations and specify the cell bandwidth accurately. Further, autocorrelation can be found in a received signal, and, consequently, the receiving terminal needs not provide a replica generating section for a frame synchronization sequence, so that it is possible to simplify the configuration of the terminal.

### (Embodiment 4)

In Embodiment 4, the subcarriers of the central supported bandwidth are divided into a plurality of subcarrier groups, and a frame is used where a P-SCH is mapped to a unique subcarrier group according to the cell bandwidth group. That is, P-SCH mapping information (i.e., mapping pattern information) is the information for identifying the cell bandwidth groups.

The differences from Embodiment 1 will be explained. First, base station 100 of Embodiment 4 is different from base station 100 of Embodiment 1 in the operations of synchronization channel generating section 150 and frame forming section 160. Synchronization channel generating section 150 of Embodiment 4 generates a sequence of a base pattern common for all cell bandwidth groups regardless of cell bandwidth information. The inputted cell bandwidth information is transmitted to frame forming section 160.

Frame forming section 160 forms a frame in which the P-SCH of the base pattern from synchronization channel generating section 150 is mapped in a unique subcarrier group according to the cell bandwidth group.

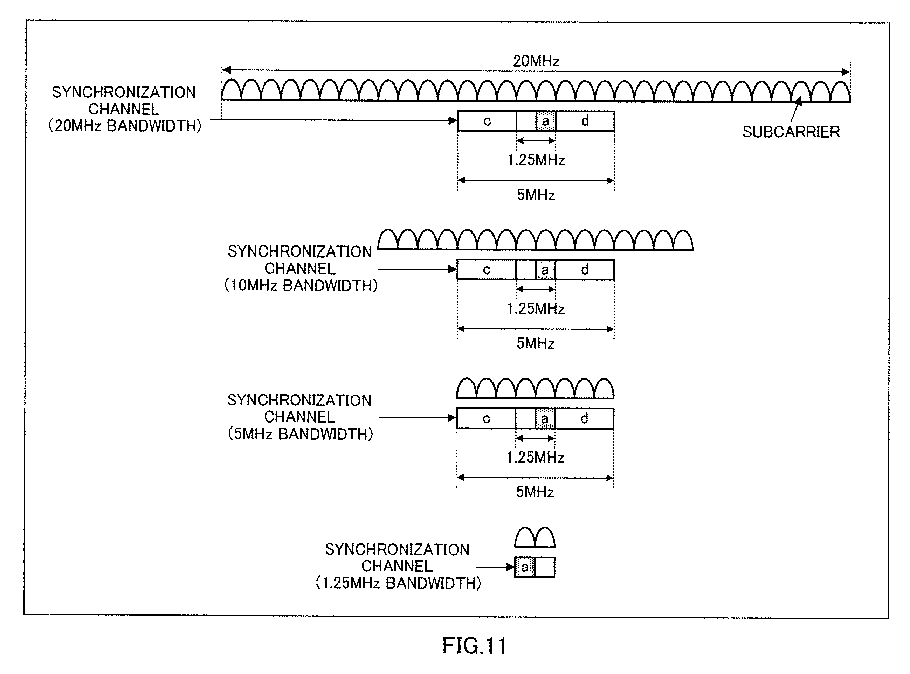

FIG.11 illustrates the relationships between cell bandwidth groups and SCH's. Here, a case will be explained using the scalable bandwidth system adopted for explanations of the operations in Embodiment 1. As shown in the figure, if the base pattern of the P-SCH is pattern "a," although the P-SCH of pattern "a" is mapped in the central supported band in the cell band group less than 5 MHz and in the cell band group equal to or greater than 5 MHz, the P-SCH of pattern "a" is mapped in a unique subcarrier group according to the cell bandwidth group. In the figure, in the case of a cell bandwidth group less than 5 MHz, the P-SCH of pattern "a" is mapped on the left half subcarrier in the central supported band, and, in the case of a cell bandwidth group equal to or greater than 5 MHz, the P-SCH of pattern "a" is mapped on the right half subcarrier in the central supported band.

Terminal 200 of Embodiment 2 is different from terminal 200 of Embodiment 1 in the operations of synchronization channel correlation section 230 and frame timing and cell bandwidth determining section 240.

Synchronization channel correlation section 230 performs correlation calculations for all OFDM symbols in a frame of a received signal after FFT processing per subcarrier group to which the transmitting side may map the P-SCH of the base pattern, using the P-SCH of the base pattern. That is, synchronization channel correlation section 230 performs the correlation calculation per OFDM symbol using all mapping pattern candidates.

Frame timing and cell bandwidth determining section 240 detects a peak of correlation value power from the output of synchronization channel correlation section 230 and detects the timing to find the peak as the frame timing. Further, it is possible to specify from the subcarrier group found from the peak, to which the cell bandwidth group the cell that is targeted for a cell search belongs.

As described above, according to the present embodiment, base station 100 is able to flexibly assign bandwidths to the terminals from a plurality of bandwidths supported in the scalable bandwidth system, the assigned bandwidths being within the cell bandwidth which is the maximum bandwidth base station 100 uses, and employs a configuration having: frame forming section 160 that forms a frame in which the subcarrier group to which the frame synchronization sequence (P-SCH) is mapped, varies according to the cell bandwidth, in the central supported band which has the minimum supported bandwidth and which is the center of the cell bandwidth; and frame transmitting sections (such as IFFT section 170, GI inserting section 180 and radio transmitting section 190) that transmit the frame.

By this means, a frame in which a frame synchronization sequence of a unique pattern is mapped according to the cell bandwidth, is transmitted to the central supported band of the minimum supported bandwidth. Consequently, if the receiving terminal receives the minimum supported bandwidth regardless of the bandwidth the terminal can receive, and detects a subcarrier group in which the frame synchronization sequence is mapped, the terminal can specify accurately to which subcarrier group the cell bandwidth of the cell which is targeted for a cell search belongs, so that it is possible to improve the cell search performance. As a result, the S-SCH that may be mapped in a unique position according to the cell bandwidth can be decoded accurately, so that it is possible to improve the cell search performance.

### (Other Embodiments)

A case has been described in Embodiment 2 where a P-SCH of a base pattern common for all cell bandwidth groups is mapped in the central supported band and where a frame is used in which the phase of the P-SCH varies per cell bandwidth group. Here, the mapping method as described above will be explained.

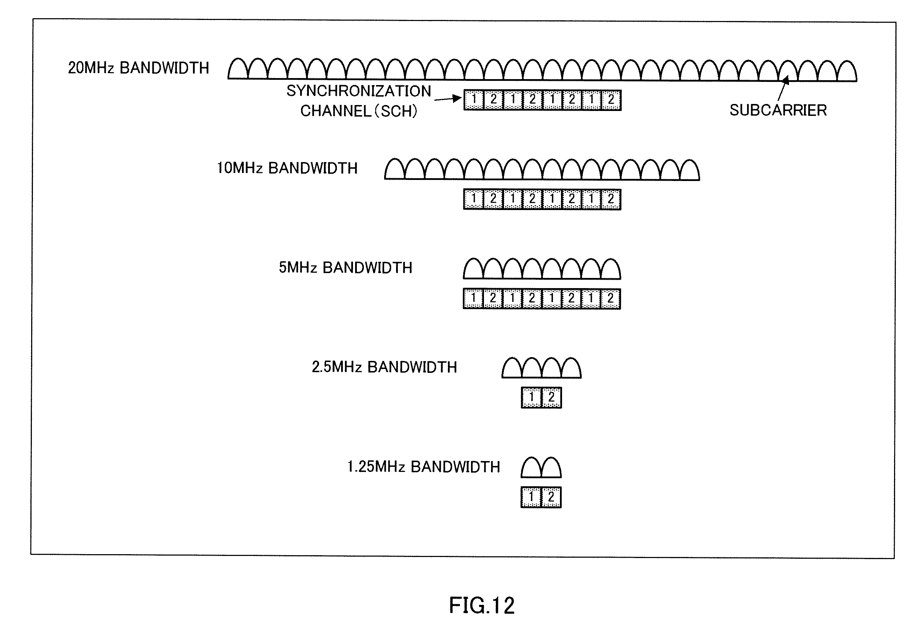

First, when a P-SCH of a pattern is defined 1.25 MHz, a method is possible where, in the case of 1.25 MHz or 2.5 MHz, that is, in the case of the cell bandwidth group less than 5 MHz, 1.25 MHz SCH is transmitted, and, in the case of the cell bandwidth group equal to or greater than 5 MHz, the P-SCH defined 1.25 MHz is repeated for times from an edge of the central 5 MHz band and 5 MHz SCH is transmitted (see FIG.12). By this means, the phase of the P-SCH shifts in the central supported band, so that it is possible to use this phase difference as phase information.

Although the band in which a P-SCH is mapped is the central supported band in the above described embodiments, the present invention is not limited to this, and a frame needs to be formed where a frame synchronization sequence of a pattern mapped in a predetermined band of the minimum supported bandwidth in the band of a cell bandwidth (or a mapping position of the frame synchronization sequence) varies according to the cell bandwidth.

### Industrial Applicability

The radio base station apparatus of the present invention is useful as a radio base station apparatus to improve cell search performance in a scalable bandwidth system.

## Claims

1. A radio base station apparatus that can flexibly assign communication bandwidths to radio terminal apparatuses from a plurality of bandwidths supported in a scalable bandwidth system comprising a plurality of radio base station apparatuses, the communication bandwidths being within a maximum supported bandwidth the radio base station apparatus uses, the radio base station apparatus comprising:
a frame forming section that forms a frame in which a pattern of a frame synchronization sequence mapped in a predetermined band of a minimum supported bandwidth in a band of the base station bandwidth varies, or in which a mapping position of the frame synchronization sequence in the predetermined band varies, according to the base station bandwidth; and
a frame transmitting section that transmits the frame.

2. The base station apparatus according to claim 1, wherein the frame forming section forms a frame in which a frame synchronization sequence of a unique pattern is mapped per group to which the base station bandwidth belongs.

3. The base station apparatus according to claim 1, wherein the frame forming section forms a frame in which a frame synchronization sequence acquired by shifting the phase of a base sequence pattern according to a group to which the base station bandwidth belongs, is mapped.

4. The base station apparatus according to claim 3, wherein the frame forming section forms a frame in which a phase reference signal as a reference of the phase difference is mapped in the predetermined band.

5. The base station apparatus according to claim 4, wherein the frame forming section forms a frame in which the phase reference signal is mapped on subcarriers which are not adjacent to each other in the predetermined band.

6. The base station apparatus according to claim 1, wherein the frame forming section forms a frame in which a frame synchronization sequence of a base sequence pattern is mapped to a first subcarrier group, and in which a frame synchronization sequence acquired by shifting the phase of the base sequence pattern according to a group to which the base station bandwidth belongs, is mapped to a second subcarrier group.
